# EUROPEAN PATENT APPLICATION

(11) **EP 4 468 143 A1**
(43) Date of publication of application: **27.11.2024**
(21) Application number: 22921517.3
(22) Date of filing: 23.09.2022
(51) Int. Cl.: G06F 9/30

(54) **INSTRUCTION PARSING METHOD AND APPARATUS, AND ELECTRONIC DEVICE**

(30) Priority: 18.01.2022 CN 202210051959
(71) Applicant: Peking University, Beijing 100871 (CN); PEKING UNIVERSITY CHONGQING RESEARCH INSTITUTE OF BIG DATA, Chongqing 401332 (CN)
(72) Inventor: LI, Ruo, Beijing 100871 (CN); LU, Tiao, Beijing 100871 (CN)
(74) Representative: Studio Torta S.p.A.
(86) International application number: PCT/CN2022/121043
(87) International publication number: WO 2023/138090

(57) **Abstract**

The present application discloses an instruction parsing method and apparatus, and an electronic device. The method includes: receiving a target instruction and a parameter processor set, wherein the target instruction includes a target instruction parameter vector, a composition element of the target instruction parameter vector is a target instruction parameter, the parameter processor set includes at least one parameter processor, and the parameter processor is composed of a preset to-be-matched command parameter vector and a first preset anonymous function; determining, from the parameter processors, a target parameter processor matching the target instruction parameter in the target instruction parameter vector, and processing the target instruction parameter by using the target parameter processor, so as to obtain a processing result; and determining, according to the processing result, a processing command corresponding to the target instruction, and executing the processing command.

## Description

### Technical Field

The present application relates to the field of software drawing, and in particular, to an instruction parsing method and apparatus, and an electronic device.

### Background

The idea of a numerical calculation general-purpose software drawing module is that numerical calculation general-purpose software transmits a drawing command and drawing parameters, a drawing module performs parameter parsing, an image is expressed by using a Canvas-Figure-Axis-Object four-layer tree, and the parameter parsing and processing process is a transformation process of the four-layer tree. After the parameter parsing and processing are completed, the four-layer tree is traversed and is converted into a gnuplot script, and finally, the script is converted into an image by calling a gnuplot program. During this process, the parameter parsing and processing are the most complex parts. Since there are many commands and parameters that need to be supported, the code maintenance difficulty may be greatly increased by performing the parameter parsing in a hard encoding mode, which is not conducive to the continuous development of modules.

In view of the above problems, an effective solution has not been proposed at present.

### Summary

Embodiments of the present application provide an instruction parsing method and apparatus, and an electronic device, so as to at least solve the technical problem in the prior art that the code maintenance difficulty is greatly increased by performing parameter parsing in a hard encoding mode, which is not conducive to the continuous development of modules.

According to one aspect of the embodiments of the present application, an instruction parsing method is provided, including: receiving a target instruction and a parameter processor set, wherein the target instruction includes a target instruction parameter vector, a composition element of the target instruction parameter vector is a target instruction parameter, the parameter processor set includes at least one parameter processor, and the parameter processor is composed of a preset to-be-matched command parameter vector and a first preset anonymous function; determining, from the parameter processors, a target parameter processor matching the target instruction parameter in the target instruction parameter vector, and processing the target instruction parameter by using the target parameter processor, so as to obtain a processing result; and determining, according to the processing result, a processing command corresponding to the target instruction, and executing the processing command.

Optionally, the step: determining the target parameter processor matching the target instruction parameter in the target instruction parameter vector, and processing the target instruction parameter by using the target parameter processor, so as to obtain the processing result, includes: starting from the first target instruction parameter in the target instruction parameter vector, traversing each parameter processor in the at least one parameter processor, and determining the target parameter processor from the at least one parameter processor on the basis of the preset to-be-matched command parameter vector of each parameter processor; and using the first preset anonymous function in the target parameter processor to process the target instruction parameter matching the target parameter processor.

Optionally, the step: starting from the first target instruction parameter in the target instruction parameter vector, traversing each parameter processor in the at least one parameter processor, and determining the target parameter processor from the at least one parameter processor on the basis of the preset to-be-matched command parameter vector of each parameter processor, includes: determining the number of elements in the preset to-be-matched command parameter vector corresponding to each parameter processor; starting from the first target instruction parameter, determining whether preceding target instruction parameters of which the number is the number of elements match elements at corresponding positions in the to-be-matched command parameter vector, and if it is determined that the preceding target instruction parameters of which the number is the number of elements match the elements at the corresponding positions in the to-be-matched command parameter vector, determining, to be the target parameter processor, the parameter processor corresponding to the preset to-be-matched command parameter vector; and starting from the first target instruction parameter that does not match the target parameter processor in the target parameter vector, determining whether the preceding target instruction parameters of which the number is the number of elements match the elements at the corresponding positions in the to-be-matched command parameter vector again, and if it is determined that the preceding target instruction parameters of which the number is the number of elements match the elements at the corresponding positions in the to-be-matched command parameter vector, determining, to be the target parameter processor, the parameter processor corresponding to the preset to-be-matched command parameter vector, until matched parameter processors are determined for all target instruction parameters.

Optionally, the step: determining whether the preceding target instruction parameters of which the number is the number of elements match the elements at the corresponding positions in the to-be-matched command parameter vector, and if it is determined that the preceding target instruction parameters of which the number is the number of elements match the elements at the corresponding positions in the to-be-matched command parameter vector, determining, to be the target parameter processor, the parameter processor corresponding to the preset to-be-matched command parameter vector, includes: if it is determined that a plurality of parameter processors are target parameter processors, selecting, to be the target parameter processor, the parameter processor having the largest number of matched target instruction parameters among the plurality of target parameter processors.

Optionally, the step: determining whether the preceding target instruction parameters of which the number is the number of elements match the elements at the corresponding positions in the to-be-matched command parameter vector, includes: determining a second preset anonymous function corresponding to each element in the to-be-matched command parameter vector; inputting the preceding target instruction parameters of which the number is the number of elements into the second preset anonymous functions corresponding to the elements at the corresponding positions, and acquiring return values returned by the second preset anonymous functions according to the input target instruction parameters; and determining, according to the return values, whether the preceding target instruction parameters of which the number is the number of elements match the elements at the corresponding positions.

Optionally, the step: determining the second preset anonymous function corresponding to each element in the to-be-matched command parameter vector, includes: determining a plurality of third preset anonymous functions; and selecting a preset number of third preset anonymous functions from the plurality of third preset anonymous functions, and performing logical operation on the preset number of third preset anonymous functions, so as to obtain the second preset anonymous function, wherein the logical operation includes at least one of logical and operation, logical or operation, and logical not operation.

Optionally, the step: determining whether the preceding target instruction parameters of which the number is the number of elements match the elements at the corresponding positions in the to-be-matched command parameter vector, and if it is determined that the preceding target instruction parameters of which the number is the number of elements match the elements at the corresponding positions in the to-be-matched command parameter vector, determining, to be the target parameter processor, the parameter processor corresponding to the preset to-be-matched command parameter vector, includes: determining whether there is an abnormal instruction parameter in the preceding target instruction parameters of which the number is the number of elements, wherein the abnormal instruction parameter is an instruction parameter that does not match any parameter processor; and if it is determined that there is an abnormal instruction parameter, deleting the abnormal instruction parameter, re-selecting preceding target instruction parameters of which the number is the number of elements, determining whether the preceding target instruction parameters of which the number is the number of elements match the elements at the corresponding positions in the to-be-matched command parameter vector, and if it is determined that the preceding target instruction parameters of which the number is the number of elements match the elements at the corresponding positions in the to-be-matched command parameter vector, determining, to be the target parameter processor, the parameter processor corresponding to the preset to-be-matched command parameter vector.

According to another aspect of the embodiments of the present application, an instruction parsing apparatus is further provided, including: a receiving module, configured to receive a target instruction and a parameter processor set, wherein the target instruction includes a target instruction parameter vector, a composition element of the target instruction parameter vector is a target instruction parameter, the parameter processor set includes at least one parameter processor, and the parameter processor is composed of a preset to-be-matched command parameter vector and a first preset anonymous function; a processing module, configured to determine, from the parameter processors, a target parameter processor matching the target instruction parameter in the target instruction parameter vector, and process the target instruction parameter by using the target parameter processor, so as to obtain a processing result; and an execution module, configured to determine, according to the processing result, a processing command corresponding to the target instruction, and execute the processing command.

According to another aspect of the embodiments of the present application, a nonvolatile storage medium is provided, wherein the nonvolatile storage medium includes a stored program, and when running, the program controls a device where the nonvolatile storage medium is located to execute the instruction parsing method.

According to another aspect of the embodiments of the present application, an electronic device is provided, wherein the electronic device includes a processor, the processor is used for running a program, and the program, executes, when running, the instruction parsing method.

In the embodiments of the present application, by means of receiving the target instruction and the parameter processor set, wherein the target instruction includes the target instruction parameter vector, the composition element of the target instruction parameter vector is the target instruction parameter, the parameter processor set includes at least one parameter processor, and the parameter processor is composed of the preset to-be-matched command parameter vector and the first preset anonymous function; determining, from the parameter processors, the target parameter processor matching the target instruction parameter in the target instruction parameter vector, and processing the target instruction parameter by using the target parameter processor, so as to obtain the processing result; and determining, according to the processing result, the processing command corresponding to the target instruction, and executing the processing command, and by means of matching the corresponding parameter processor for the target instruction parameter, and processing the matched target instruction parameter by using the parameter processor, the purpose of efficiently parsing the target instruction is achieved, and the technical effect of realizing the implementation efficiency and maintainability of parameter parsing under complex conditions is achieved, thereby solving the technical problem in the prior art that code maintenance difficulty is greatly increased by performing parameter parsing in a hard encoding mode, which is not conducive to the continuous development of modules.

### Brief Description of the Drawings

The drawings described herein are used to provide a further understanding of the present application and constitute a part of the present application, and schematic embodiments of the present application and descriptions thereof are used to explain the present application, and do not constitute improper limitations to the present application. In the drawings:
Fig. 1 is a schematic flowchart of an instruction parsing method according to an embodiment of the present application;
Fig. 2 is a schematic flowchart of a complete instruction parsing process according to an embodiment of the present application;
Fig. 3 is a schematic structural diagram of an instruction parsing apparatus according to an embodiment of the present application; and
Fig. 4 is a schematic structural diagram of a computer device according to an embodiment of the present application.

### Detailed Description of the Embodiments

In order that those skilled in the art may better understand the solutions of the present application, a clear and complete description of technical solutions in the embodiments of the present application will be given below, in combination with the drawings in the embodiments of the present application. Apparently, the embodiments described below are merely a part, but not all, of the embodiments of the present application. All of other embodiments, obtained by those ordinary skilled in the art based on the embodiments in the present application without any creative effort, shall fall into the protection scope of the present application.

It should be noted that, the terms "first" and "second" and the like in the specification, claims and the above-mentioned drawings of the present application are used for distinguishing similar objects, and are not necessarily used for describing a specific sequence or precedence order. It should be understood that the data used in this way may be interchanged under appropriate circumstances, so that the embodiments of the present application described herein may be implemented in a sequence other than those illustrated or described herein. Furthermore, the terms "including" and "having", and any variations thereof are intended to cover non-exclusive inclusions, for example, processes, methods, systems, products or devices including a series of steps or units are not necessarily limited to those clearly listed steps or units, but may include other steps or units that are not clearly listed or are inherent to these processes, methods, products or devices.

According to the embodiments of the present application, a method embodiment of an instruction parsing method is provided, it should be noted that the steps shown in the flowchart of the drawings may be executed in a computer system such as a group of computer-executable instructions, and although a logical sequence is shown in the flowchart, in some cases, the illustrated or described steps may be executed in a different sequence from herein.

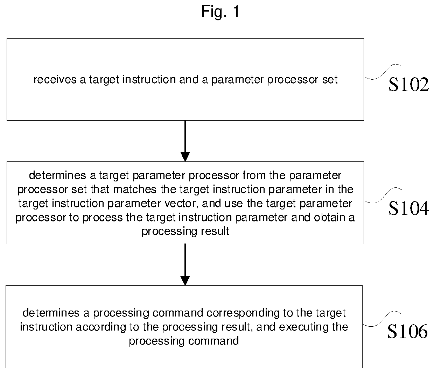

Fig. 1 shows an instruction parsing method according to an embodiment of the present disclosure, and as shown in Fig. 1, the method includes the following steps:
Step S102, receiving a target instruction and a parameter processor set, wherein the target instruction includes a target instruction parameter vector, a composition element of the target instruction parameter vector is a target instruction parameter, the parameter processor set includes at least one parameter processor, and the parameter processor is composed of a preset to-be-matched command parameter vector and a first preset anonymous function.

In some embodiments of the present application, in addition to the target instruction parameter vector (args) and the parameter processor set (handlers), the target instruction may further include a command name (cmd) and the number of command parameters (argc).

In some embodiments of the present application, the first preset anonymous function in the parameter processor may be an anonymous function of which the type is handle, and the preset to-be-matched command parameter vector is a pre-registered vector.

In some embodiments of the present application, the pre-registration refers to adding the preset to-be-matched command parameter vector into a Minglin processor in a program initialization stage, and then directly calling a command processor with the preset to-be-matched command parameter vector added to perform command processing during subsequent actual command processing.

Step S104, determining, from the parameter processors, a target parameter processor matching the target instruction parameter in the target instruction parameter vector, and processing the target instruction parameter by using the target parameter processor, so as to obtain a processing result.

In some embodiments of the present application, the specific mode of determining the target parameter processor matching the target instruction parameter in the target instruction parameter vector, and processing the target instruction parameter by using the target parameter processor, so as to obtain the processing result is as follows: starting from the first target instruction parameter in the target instruction parameter vector, traversing each parameter processor in the at least one parameter processor, and determining the target parameter processor from the at least one parameter processor on the basis of the preset to-be-matched command parameter vector of each parameter processor; and using the first preset anonymous function in the target parameter processor to process the target instruction parameter matching the target parameter processor.

In some embodiments of the present application, the target instruction may be any target instruction, which is set based on user requirements. Specifically, when the command is a "hold command", the hold command may transmit a character string parameter with a value of on or off. When processing the hold command, the command processor needs to actually process hold ('on') or hold ('off') after matching the parameters. The processing herein is, in fact, to modify a global variable in one program, so as to change the processing mode of the module for a subsequent drawing command. In a hold off state, before each drawing, the module needs to clear up the currently drawn graph, while the module does not need to clear up the currently drawn graph in a hold on state.

In some embodiments of the present application, the step: starting from the first target instruction parameter in the target instruction parameter vector, traversing each parameter processor in the at least one parameter processor, and determining the target parameter processor from the at least one parameter processor on the basis of the preset to-be-matched command parameter vector of each parameter processor, includes: determining the number of elements in the preset to-be-matched command parameter vector corresponding to each parameter processor; starting from the first target instruction parameter, determining whether preceding target instruction parameters of which the number is the number of elements match elements at corresponding positions in the to-be-matched command parameter vector, and if it is determined that the preceding target instruction parameters of which the number is the number of elements match the elements at the corresponding positions in the to-be-matched command parameter vector, determining, to be the target parameter processor, the parameter processor corresponding to the preset to-be-matched command parameter vector; and starting from the first target instruction parameter that does not match the target parameter processor in the target parameter vector, determining whether the preceding target instruction parameters of which the number is the number of elements match the elements at the corresponding positions in the to-be-matched command parameter vector again, and if it is determined that the preceding target instruction parameters of which the number is the number of elements match the elements at the corresponding positions in the to-be-matched command parameter vector, determining, to be the target parameter processor, the parameter processor corresponding to the preset to-be-matched command parameter vector, until matched parameter processors are determined for all target instruction parameters.

In some embodiments of the present application, in the step: determining whether the preceding target instruction parameters of which the number is the number of elements match the elements at the corresponding positions in the to-be-matched command parameter vector, and if it is determined that the preceding target instruction parameters of which the number is the number of elements match the elements at the corresponding positions in the to-be-matched command parameter vector, determining, to be the target parameter processor, the parameter processor corresponding to the preset to-be-matched command parameter vector, if it is determined that a plurality of parameter processors are target parameter processors, it is possible to select, to be the target parameter processor, the parameter processor having the largest number of matched target instruction parameters among the plurality of target parameter processors.

Specifically, in some embodiments of the present application, the specific process of the matching process is as follows: starting from the 0th element of the command parameter vector args (starting from 0 in a subscript of a C++ array), traversing all command processors handle in handlers before all parameters are matched, during the process of traversing each handle, traversing handle.params (i.e., the preset to-be-matched command parameter vector), and checking whether a corresponding element in the args satisfies a condition to be satisfied by a corresponding element in the handle.params (the condition herein is implemented by an anonymous function of which the function prototype is bool (void*)); and after the handler satisfying the condition is found (if it is not found, the above process is repeated starting from the element of the next args), assigning the handler to matched_handler (i.e., selecting the anonymous function of the target parameter processor to process the parameters), using matched_handler.handle to process the matched command parameter, and starting from unprocessed command parameters, repeating the above process until all parameters are processed.

In some embodiments of the present application, the step: determining whether the preceding target instruction parameters of which the number is the number of elements match the elements at the corresponding positions in the to-be-matched command parameter vector, includes: determining a second preset anonymous function corresponding to each element in the to-be-matched command parameter vector; inputting the preceding target instruction parameters of which the number is the number of elements into the second preset anonymous functions corresponding to the elements at the corresponding positions, and acquiring return values returned by the second preset anonymous functions according to the input target instruction parameters; and determining, according to the return values, whether the preceding target instruction parameters of which the number is the number of elements match the elements at the corresponding positions.

In some embodiments of the present application, the step: determining the second preset anonymous function corresponding to each element in the to-be-matched command parameter vector, includes: determining a plurality of third preset anonymous functions; and selecting a preset number of third preset anonymous functions from the plurality of third preset anonymous functions, and performing logical operation on the preset number of third preset anonymous functions, so as to obtain the second preset anonymous function, wherein the logical operation includes at least one of logical and operation, logical or operation, and logical not operation.

In some embodiments of the present application, the step: determining whether the preceding target instruction parameters of which the number is the number of elements match the elements at the corresponding positions in the to-be-matched command parameter vector, and if it is determined that the preceding target instruction parameters of which the number is the number of elements match the elements at the corresponding positions in the to-be-matched command parameter vector, determining, to be the target parameter processor, the parameter processor corresponding to the preset to-be-matched command parameter vector, includes: determining whether there is an abnormal instruction parameter in the preceding target instruction parameters of which the number is the number of elements, wherein the abnormal instruction parameter is an instruction parameter that does not match any parameter processor; and if it is determined that there is an abnormal instruction parameter, deleting the abnormal instruction parameter, re-selecting preceding target instruction parameters of which the number is the number of elements, determining whether the preceding target instruction parameters of which the number is the number of elements match the elements at the corresponding positions in the to-be-matched command parameter vector, and if it is determined that the preceding target instruction parameters of which the number is the number of elements match the elements at the corresponding positions in the to-be-matched command parameter vector, determining, to be the target parameter processor, the parameter processor corresponding to the preset to-be-matched command parameter vector.

Step S106, determining, according to the processing result, a processing command corresponding to the target instruction, and executing the processing command.

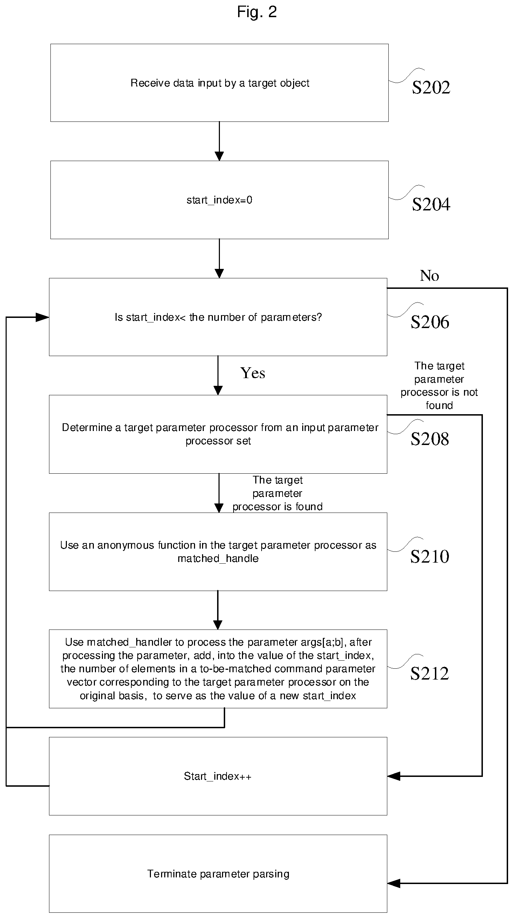

In some embodiments of the present disclosure, the image processing mode described in Fig. 1 may be implemented by a target function, which is self-defined by a target object. Specifically, when the target function is a target function created by the target object using C++ remaining elements, the specific process when the target function executes the instruction parsing method shown in Fig. 1 is shown in Fig. 2, and includes the following steps:
First, after receiving a parameter parsing instruction, the target function first executes step S202 to receive data input by the target object, wherein the input data includes a command name, a parameter vector, the number of parameters, and a parameter processor set, the number of parameters is used for determining the number of elements in the parameter vector, and the number of elements in the parameter vector represents different parameters.

Then, the target function executes step S204 to assign the value of a custom variable start_index to zero, wherein the start_index represents the subscript of the currently processed parameter, and since the C++ language starts to count from 0, the start_index is assigned an initial value of zero. It may be understood that, when the target object uses languages of other types, the initial value of the start_index may also be other values.

Next, the target function executes step S206 to judge whether the start_index is less than argc (the number of parameters), and if the judgement result is that the start_index is not less than argc, the target function terminates parameter parsing, and controls a device running the target function to execute a command corresponding to the input data; and if the judgement result is that the start_index is less than argc, the target function continues to execute step S208 to determine a target parameter processor from an input parameter processor set. If no matched target parameter processor is found, the target function adds 1 to the start index, and executes step S206 again; and if the matched target parameter processor is found, the target function executes step S210 to use an anonymous function in the target parameter processor as matched_handler, then executes step S212 to use the matched_handler to process the parameter args[a;b], after processing the parameter, adds, into the value of the start index, the number of elements in a to-be-matched command parameter vector corresponding to the target parameter processor on the original basis, so as to serve as the value of a new start index, and executes step S206 again, wherein a=start_index, b=start_index+matched_handler.params.size( ), that is, b=start_index+the number of elements in the to-be-matched command parameter vector corresponding to the target parameter processor.

By means of receiving the target instruction and the parameter processor set, wherein the target instruction includes the target instruction parameter vector, the composition element of the target instruction parameter vector is the target instruction parameter, the parameter processor set includes at least one parameter processor, and the parameter processor is composed of the preset to-be-matched command parameter vector and the first preset anonymous function; determining, from the parameter processors, the target parameter processor matching the target instruction parameter in the target instruction parameter vector, and processing the target instruction parameter by using the target parameter processor, so as to obtain the processing result; and determining, according to the processing result, the processing command corresponding to the target instruction, and executing the processing command, a table driving method is combined with a greedy policy, a lambda (anonymous function) expression introduced by C++11 is fully utilized to extremely effectively separate the implementation codes of a plurality of parameters of the command, so that the parameters have orthogonality; and moreover, the present method realizes a unified parameter parsing framework, so that when a developer implements a new command, complex parameter parsing may be effectively supported only by using the framework, thereby improving the development efficiency and the maintainability of the codes.

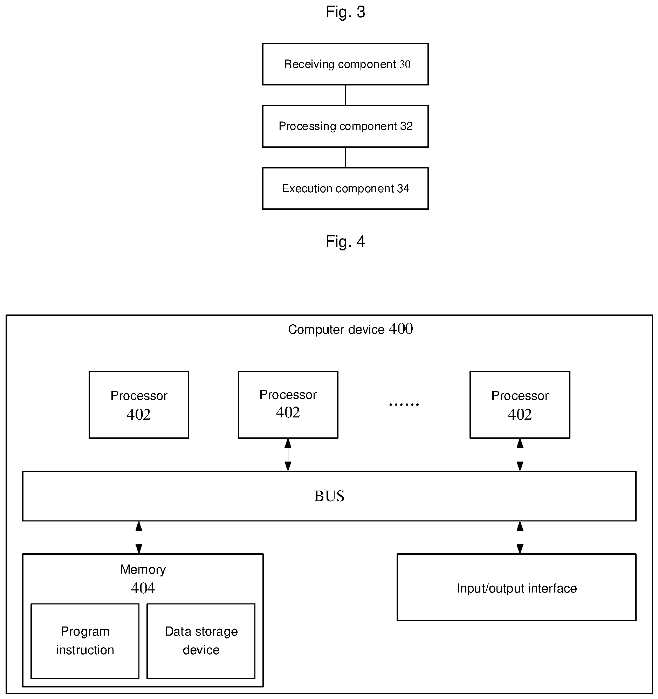

According to the embodiments of the present application, an apparatus embodiment of an instruction parsing apparatus is provided. Fig. 3 shows the instruction parsing apparatus provided according to an embodiment of the present application, and as shown in Fig. 3, the instruction parsing apparatus includes: a receiving module 30, configured to receive a target instruction and a parameter processor set, wherein the target instruction includes a target instruction parameter vector, a composition element of the target instruction parameter vector is a target instruction parameter, the parameter processor set includes at least one parameter processor, and the parameter processor is composed of a preset to-be-matched command parameter vector and a first preset anonymous function; a processing module 32, configured to determine, from the parameter processors, a target parameter processor matching the target instruction parameter in the target instruction parameter vector, and process the target instruction parameter by using the target parameter processor, so as to obtain a processing result; and an execution module 34, configured to determine, according to the processing result, a processing command corresponding to the target instruction, and execute the processing command.

It should be noted that, the instruction parsing apparatus shown in Fig. 3 may be used for executing the instruction parsing method shown in Fig. 1, therefore, the related explanation of the instruction parsing method shown in Fig. 1 is also applicable to the instruction parsing apparatus shown in Fig. 3, and thus details are not described herein again.

According to the embodiments of the present application, a storage medium embodiment of a nonvolatile storage medium is provided. The nonvolatile storage medium includes a stored program, wherein when running, the program controls a device where the nonvolatile storage medium is located to execute the following instruction parsing method: receiving a target instruction and a parameter processor set, wherein the target instruction includes a target instruction parameter vector, a composition element of the target instruction parameter vector is a target instruction parameter, the parameter processor set includes at least one parameter processor, and the parameter processor is composed of a preset to-be-matched command parameter vector and a first preset anonymous function; determining, from the parameter processors, a target parameter processor matching the target instruction parameter in the target instruction parameter vector, and processing the target instruction parameter by using the target parameter processor, so as to obtain a processing result; and determining, according to the processing result, a processing command corresponding to the target instruction, and executing the processing command.

According to the embodiments of the present application, an embodiment of an electronic device is provided. The electronic device includes a processor, and the processor is used for running a program, wherein the program, executes, when running, the following instruction parsing method: receiving a target instruction and a parameter processor set, wherein the target instruction includes a target instruction parameter vector, a composition element of the target instruction parameter vector is a target instruction parameter, the parameter processor set includes at least one parameter processor, and the parameter processor is composed of a preset to-be-matched command parameter vector and a first preset anonymous function; determining, from the parameter processors, a target parameter processor matching the target instruction parameter in the target instruction parameter vector, and processing the target instruction parameter by using the target parameter processor, so as to obtain a processing result; and determining, according to the processing result, a processing command corresponding to the target instruction, and executing the processing command.

According to the embodiments of the present application, an embodiment of a computer terminal is further provided. Fig. 4 is a schematic structural diagram of a computer device 400 shown according to an embodiment of the present application.

In an exemplary embodiment, a computer-readable storage medium including an instruction is further provided, for example, a memory 404 including an instruction, and the instruction may be executed by a processor 402 of the apparatus 400 to execute the following instruction parsing method: receiving a target instruction and a parameter processor set, wherein the target instruction includes a target instruction parameter vector, a composition element of the target instruction parameter vector is a target instruction parameter, the parameter processor set includes at least one parameter processor, and the parameter processor is composed of a preset to-be-matched command parameter vector and a first preset anonymous function; determining, from the parameter processors, a target parameter processor matching the target instruction parameter in the target instruction parameter vector, and processing the target instruction parameter by using the target parameter processor, so as to obtain a processing result; and determining, according to the processing result, a processing command corresponding to the target instruction, and executing the processing command.

The serial numbers of the embodiments of the present application are only for description, and do not represent the advantages or disadvantages of the embodiments.

In the above embodiments of the present application, the description of each embodiment has its own emphasis. For parts that are not described in detail in a certain embodiment, reference may be made to related descriptions of other embodiments.

In the several embodiments provided by the present application, it should be understood that, the disclosed technical content may be implemented in other manners. The apparatus embodiments described above are merely exemplary, for example, the division of the units is only a logical function division, there may be other division manners in practical implementation, for example, a plurality of units or components may be combined or integrated to another system, or some features may be omitted or not executed. From another point of view, the displayed or discussed mutual coupling or direct coupling or communication connection may be indirect coupling or communication connection of units or modules by means of some interfaces, and may be in electrical or other forms.

The units described as separate components may be separated physically or not, components displayed as units may be physical units or not, namely, may be located in one place, or may also be distributed on a plurality of units. A part of or all of the units may be selected to implement the purposes of the solutions in the present embodiment according to actual demands.

In addition, the functional units in various embodiments of the present application may be integrated in one processing unit, or the units individually exist physically, or two or more units are integrated in one unit. The integrated unit may be implemented in the form of hardware, and may also be implemented in the form of a software functional unit.

If the integrated unit is implemented in the form of the software functional unit and is sold or used as an independent product, it may be stored in a computer-readable storage medium. Based on this understanding, the technical solutions of the present application substantially, or the part contributing to the prior art, or part of or all the technical solutions may be implemented in the form of a software product, the computer software product is stored in a storage medium, which includes several instructions for enabling a computer device (which may be a personnel computer, a server, or a network device or the like) to execute all or part of the steps of the method in various embodiments of the present application. The foregoing storage medium includes a variety of media capable of storing program codes, such as a USB disk, a read-only memory (ROM, Read-Only Memory), a random access memory (RAM, Random Access Memory), a mobile hard disk, a magnetic disk, or an optical disk.

The foregoing descriptions are merely specific embodiments of the present application. It should be pointed out that, those ordinary skilled in the art may make several improvements and modifications without departing from the principles of the present application, and these improvements and modifications should also be regarded as the protection scope of the present application.

### Industrial Applicability

The solutions provided in the embodiments of the present application may be applied to the field of software drawings. In the embodiments of the present application, by means of matching the corresponding parameter processor for the target instruction parameter, and processing the matched target instruction parameter by using the parameter processor, the purpose of efficiently parsing the target instruction is achieved, and the technical effect of realizing the implementation efficiency and maintainability of parameter parsing under complex conditions is achieved, thereby solving the technical problem in the prior art that code maintenance difficulty is greatly increased by performing parameter parsing in a hard encoding mode, which is not conducive to the continuous development of modules.

## Claims

1. An instruction parsing method, comprising:
receiving a target instruction and a parameter processor set, wherein the target instruction comprises a target instruction parameter vector, a composition element of the target instruction parameter vector is a target instruction parameter, the parameter processor set comprises at least one parameter processor, and the parameter processor is composed of a preset to-be-matched command parameter vector and a first preset anonymous function;
determining, from the parameter processors, a target parameter processor matching the target instruction parameter in the target instruction parameter vector, and processing the target instruction parameter by using the target parameter processor, so as to obtain a processing result; and
determining, according to the processing result, a processing command corresponding to the target instruction, and executing the processing command.

2. The instruction parsing method according to claim 1, wherein the step: determining the target parameter processor matching the target instruction parameter in the target instruction parameter vector, and processing the target instruction parameter by using the target parameter processor, so as to obtain the processing result, comprises:
starting from the first target instruction parameter in the target instruction parameter vector, traversing each parameter processor in the at least one parameter processor, and determining the target parameter processor from the at least one parameter processor on the basis of the preset to-be-matched command parameter vector of each parameter processor; and
using the first preset anonymous function in the target parameter processor to process the target instruction parameter matching the target parameter processor.

3. The instruction parsing method according to claim 2, wherein the step: starting from the first target instruction parameter in the target instruction parameter vector, traversing each parameter processor in the at least one parameter processor, and determining the target parameter processor from the at least one parameter processor on the basis of the preset to-be-matched command parameter vector of each parameter processor, comprises:
determining the number of elements in the preset to-be-matched command parameter vector corresponding to each parameter processor;
starting from the first target instruction parameter, determining whether preceding target instruction parameters of which the number is the number of elements match elements at corresponding positions in the to-be-matched command parameter vector, and if it is determined that the preceding target instruction parameters of which the number is the number of elements match the elements at the corresponding positions in the to-be-matched command parameter vector, determining, to be the target parameter processor, the parameter processor corresponding to the preset to-be-matched command parameter vector; and
starting from the first target instruction parameter that does not match the target parameter processor in the target parameter vector, determining whether the preceding target instruction parameters of which the number is the number of elements match the elements at the corresponding positions in the to-be-matched command parameter vector again, and if it is determined that the preceding target instruction parameters of which the number is the number of elements match the elements at the corresponding positions in the to-be-matched command parameter vector, determining, to be the target parameter processor, the parameter processor corresponding to the preset to-be-matched command parameter vector, until matched parameter processors are determined for all target instruction parameters.

4. The instruction parsing method according to claim 3, wherein the step: determining whether the preceding target instruction parameters of which the number is the number of elements match the elements at the corresponding positions in the to-be-matched command parameter vector, and if it is determined that the preceding target instruction parameters of which the number is the number of elements match the elements at the corresponding positions in the to-be-matched command parameter vector, determining, to be the target parameter processor, the parameter processor corresponding to the preset to-be-matched command parameter vector, comprises:
if it is determined that a plurality of parameter processors are target parameter processors, selecting, to be the target parameter processor, the parameter processor having the largest number of matched target instruction parameters among the plurality of target parameter processors.

5. The instruction parsing method according to claim 3, wherein the step: determining whether the preceding target instruction parameters of which the number is the number of elements match the elements at the corresponding positions in the to-be-matched command parameter vector, comprises:
determining a second preset anonymous function corresponding to each element in the to-be-matched command parameter vector;
inputting the preceding target instruction parameters of which the number is the number of elements into the second preset anonymous functions corresponding to the elements at the corresponding positions, and acquiring return values returned by the second preset anonymous functions according to the input target instruction parameters; and
determining, according to the return values, whether the preceding target instruction parameters of which the number is the number of elements match the elements at the corresponding positions.

6. The instruction parsing method according to claim 5, wherein the step: determining the second preset anonymous function corresponding to each element in the to-be-matched command parameter vector, comprises:
determining a plurality of third preset anonymous functions; and
selecting a preset number of third preset anonymous functions from the plurality of third preset anonymous functions, and performing logical operation on the preset number of third preset anonymous functions, so as to obtain the second preset anonymous function, wherein the logical operation comprises at least one of logical and operation, logical or operation, and logical not operation.

7. The instruction parsing method according to claim 3, wherein the step: determining whether the preceding target instruction parameters of which the number is the number of elements match the elements at the corresponding positions in the to-be-matched command parameter vector, and if it is determined that the preceding target instruction parameters of which the number is the number of elements match the elements at the corresponding positions in the to-be-matched command parameter vector, determining, to be the target parameter processor, the parameter processor corresponding to the preset to-be-matched command parameter vector, comprises:
determining whether there is an abnormal instruction parameter in the preceding target instruction parameters of which the number is the number of elements, wherein the abnormal instruction parameter is an instruction parameter that does not match any parameter processor; and
if it is determined that there is an abnormal instruction parameter, deleting the abnormal instruction parameter, re-selecting preceding target instruction parameters of which the number is the number of elements, determining whether the preceding target instruction parameters of which the number is the number of elements match the elements at the corresponding positions in the to-be-matched command parameter vector, and if it is determined that the preceding target instruction parameters of which the number is the number of elements match the elements at the corresponding positions in the to-be-matched command parameter vector, determining, to be the target parameter processor, the parameter processor corresponding to the preset to-be-matched command parameter vector.

8. An instruction parsing apparatus, comprising:
a receiving module, configured to receive a target instruction and a parameter processor set, wherein the target instruction comprises a target instruction parameter vector, a composition element of the target instruction parameter vector is a target instruction parameter, the parameter processor set comprises at least one parameter processor, and the parameter processor is composed of a preset to-be-matched command parameter vector and a first preset anonymous function;
a processing module, configured to determine, from the parameter processors, a target parameter processor matching the target instruction parameter in the target instruction parameter vector, and process the target instruction parameter by using the target parameter processor, so as to obtain a processing result; and
an execution module, configured to determine, according to the processing result, a processing command corresponding to the target instruction, and execute the processing command.

9. A nonvolatile storage medium, wherein the nonvolatile storage medium comprises a stored program, and when running, the program controls a device where the nonvolatile storage medium is located to execute the instruction parsing method according to any one of claims 1-7.

10. An electronic device, wherein the electronic device comprises a processor, the processor is used for running a program, and the program, executes, when running, the instruction parsing method according to any one of claims 1-7.
